# EUROPEAN PATENT SPECIFICATION

(11) **EP 4 649 006 B1**
(45) Date of publication and mention of the grant of the patent: **25.11.2026**
(21) Application number: 24716903.0
(22) Date of filing: 12.01.2024
(51) Int. Cl.: B64C 1/14, E05C 1/00, E05C 1/14

(54) **A DOOR LOCK MECHANISM**
TÜRVERRIEGELUNGSMECHANISMUS
MÉCANISME DE VERROUILLAGE DE PORTE

(30) Priority: 13.01.2023 TR 202300437
(43) Date of publication of application: 19.11.2025
(73) Proprietor: Tusas- Turk Havacilik Ve Uzay Sanayii Anonim Sirketi, 06980 Ankara (TR)
(72) Inventor: BAL, Mustafa, 06980 Kahramankazan, Ankara (TR)
(74) Representative: Berkkam, Ayfer
(86) International application number: PCT/TR2024/050022
(87) International publication number: WO 2024/151243

(56) References cited:
- EP-A1- 0 492 288
- KR-B1- 102 405 450
- US-A- 2 497 624

## Description

This invention relates to a locking mechanism suitable for use on a door of an air vehicle.

In aviation, there are various types of doors such as entry doors, emergency exit doors, service doors, cargo doors, etc., and lock mechanisms that lock or release these doors to fix or move them. In sliding door systems for air vehicles, auxiliary handles are often present to facilitate door control during opening and closing operations. There is a need for providing a lightweight and effective lock system and handle design suitable for aviation structures. For both external and internal lock systems, door handles are typically connected to different triggers, leading to challenges in terms of space-saving and weight considerations. Additionally, door handles often operate in connection with each other. However, reliability of such systems poses some risks.

US2497624 A, which is included in the known-state of the art, discloses building hardware in the nature of latches or locks usable upon doors, windows or other closures- where a releasable latch is desirable.

EP0492288 A1, which is included in the known-state of the art, discloses a device for operating the door lock of a vehicle; the device includes a first handle assembly mountable externally on the door, a second handle assembly mountable internally on the door, a key unit operable from outside the door, a safety button operable from inside the door and an operating plate supported freely by a first pin, which is integral with one of said handle assemblies, and of a linkage connected at one end to a point integral with one of the handle assemblies and at the opposite end to said plate, the first pin being engaged slidably in a rectilinear first aperture of the plate, and a substantially L-shaped second aperture of the plate being engaged by a second pin, integral to the first, said second aperture having a first substantially rectilinear branch parallel to the first aperature and having a length substantially identical to it.

KR 102405450 B1, which is included in the known-state of the art, discloses a locking device for a folding door, and more particularly, a technology for improving the structure so that the frame of the folding door is slimmed and enabling the easy setting and release of the locked state of the folding door.

CN107120015, which is included in the known-state of the art, discloses an operating mechanism for an aircraft door used in emergencies. Said mechanism comprises a handle mechanism used in emergencies on the aircraft. In this device, the handle is mounted into a sealed box on a cover, and one end of the handle is connected with a torsion spring and a first lever with a sleeve, and the first lever is hinged to the other end of a second lever. A pin shaft is pressed to move the handle, and then the cover opens and closes.

US5823473, which is included in the known-state of the art, discloses a latch lock mechanism for an aircraft cargo door. The latch lock mechanism comprises straight-through drive shafts rotated by a common drive unit. Towing hooks are attached to the outer ends of the drive shafts, which move together with the towing pins fixed to the aircraft fuselage. When the cargo door is opened or closed, the towing hooks and the towing pin act together to open the door against ice jams.

Thanks to a door lock mechanism according to the present invention, a highly durable door lock system is provided.

Another object of the present invention is to provide a lightweight door lock system for an air vehicle.

Another object of the present invention is to lock a door by moving two handles with a single shaft.

Another object of the present invention is to lock a door by moving one handle while disabling the other handle provided on the other side of the door.

Another object of the present invention is to lock a door in a practical, effective, easy and reliable way.

The door lock mechanism realized to achieve the object of the invention, which is defined in the first claim and other claims dependent thereon, comprises a body which is an air and/or a space vehicle; at least one door on the body, which is opened or closed to provide or prevent access into the body; a handle that is moved by the user to allow the door to be opened or closed; at least one transfer element capable of moving up and down along the direction it extends when the handle is triggered by the user; at least one slot on the body, in which the transfer element is inserted in an almost completely removable manner, and which is provided as a recess allowing the transfer element to be inserted and removed; the transfer element located at least partially within the slot; a first position (I) of the handle that limits the door movement thanks to the transfer element; a second position (II) of the handle that allows door movement thanks to the transfer element completely removed from the slot.

The door lock mechanism according to the invention comprises a first handle and a second handle that are located opposite each other on the door so as to be rotated by the user around the axis they are connected; a first aperture and a second aperture, one below the transfer element and the other above the transfer element, sequentially and at a distance therebetween; the transfer element that can be moved when the first handle contacts the first aperture wall and the user triggers the first handle, or when the second handle contacts the second aperture wall and the user triggers the second handle; the transfer element which enables the second handle to remain in the second position while the first handle is in the first position when the first handle is triggered by the user, thus enabling the second handle to remain passive while the first handle is active, or which enables the first handle to remain in the second position while the second handle is in the first position when the second handle is triggered by the user, thus enabling the first handle to remain passive while the second handle is active. By moving one end of the first handle or the second handle within the first aperture and the second aperture, the movement of the second handle is prevented while the first handle is operating or the movement of the first handle is prevented while the second handle is operating. With a single transmission element, the first handle and the second handle are enabled to operate independently of each other at different times without hindering each other's movement.

In an embodiment of the invention, the door lock mechanism comprises the first position of the first handle when it is triggered by the user and contacts the upper wall of the first aperture; the first aperture and the second aperture that enable the second handle to contact the lower wall of the second aperture while the first handle is in the first position, thus enabling the first handle and the second handle to act as a stopper on each other. When the first handle is pulled and brought to the first position by the user, the transfer element moves upwards. In this way, while the second handle contacting the upper wall of the second aperture is in the first position, the first handle is in contact with the lower wall of the first aperture. The second handle remains motionless while the first handle moves, or the first handle remains motionless while the second handle moves.

In an embodiment of the invention, the door lock mechanism comprises the door with the first handle on one side and the second handle on the other side. Therefore, the door can be opened and closed both from inside and outside.

In an embodiment of the invention, the door lock mechanism comprises a first grip fixed to the door, enabling the first handle to move around the axis to which it is connected, contacting the first handle in the first position when the first handle is triggered by the user, and acting as a limiter and stopper for the first handle; a second grip enabling the second handle to move around the axis to which it is connected, contacting the second handle in the first position when the second handle is triggered by the user, and acting as a limiter and stopper for the second handle; at least one connecting element located on the first grip and the second grip, enabling the connection of the first handle and the second handle with the first grip and the second grip, and enabling them to rotate around their own axis at their connection point. The first handle or the second handle are rotated around the point where they are connected by the connecting element to the first grip or the second grip. The first handle and the second handle can be pulled by the user up to the point allowed by the first grip and the second grip. While the door is moved to the second position, it can be pulled by the user by holding the first grip or the second grip.

In an embodiment of the invention, the door lock mechanism comprises a first handle and a second handle in the same form, which are symmetrical on different sides of the door, facing each other. Similarly, the first grip and the second grip are located opposite each other and have a symmetrical and identical form with each other.

In an embodiment of the invention, the door lock mechanism comprises the first handle and the second handle, with one end thereof in contact with the wall of the first aperture or the second aperture, and the other end thereof located almost completely perpendicular to the connecting element. It comprises an extension extending from the connecting element towards the first aperture or second aperture, remaining within the first aperture or second aperture; another extension at an angle with said extension. While one extension is pulled by the user, another extension remains within the first or second aperture and moves the transfer element up and down.

In an embodiment of the invention, the door lock mechanism comprises at least one pin on the transfer element, which is inserted in the slot when the transfer element moves, enabling the movement of the door to be restricted (locked), thus allowing the door to be moved to the second position. The door movement is completed when the pin is inserted into the slot.

In an embodiment of the invention, the door lock mechanism comprises the first aperture and the second aperture, one located above and the other below, with a distance between them, wherein the first aperture and the second aperture are of equal size, have a length equal to the distance that the pin can enter into the slot, and have almost exactly the same dimensions. The first handle and the second handle move within the first aperture and the second aperture for the same distance that the pin is inserted into the slot.

In an embodiment of the invention, the door lock mechanism comprises at least one spring on the pin, which is compressed as the pin is inserted into or removed from the slot by applying pressure to the slot while the door is moved from the first position to the second position by the user, thus allowing the pin to be inserted or removed from the slot. The pin slid on an inclined surface compresses the spring, thus allowing the pin to enter the slot.

In an embodiment of the invention, the door lock mechanism comprises at least one rail mechanism on the door, which allows the door to be opened and closed by sliding when the first handle or the second handle is pulled by the user. It enables the door to be pushed left and right by the user.

In an embodiment of the invention, the door lock mechanism comprises at least one bracket located between the slot and the transfer element so as to surround the pin, applying pressure to the pin together with the spring, thus enabling the pin to be inserted or removed from the slot more safely.

In an embodiment of the invention, the door lock mechanism comprises at least one frame on the door; the first aperture and the second aperture that are located opposite each other on the frame, one under the frame and the other above the frame; the first handle and the second handle, in which the lower wall of the first aperture remains on the frame or the upper wall of the second aperture ends the movement upon contact with the frame. The frame acts as a stopper for the first aperture and the second aperture. The first handle or second handle moved from the first position to the second position or from the second position to the first position can change position on the frame as much as the distance that the first aperture or second aperture can move.

In an embodiment of the invention, the door lock mechanism comprises at least one gasket, which is an o-ring between the first aperture wall and the second aperture wall and the frame. In this way, both surfaces of the door can be sealed.

In an embodiment of the invention, the door lock mechanism comprises the first handle or second handle that have an almost complete V shape with two extensions. Therefore, while one extension is pulled by the user, another extension triggers the transfer element.

In an embodiment of the invention, the door lock mechanism comprises the first handle or second handle suitable for use on a door with a sliding mechanism. Thanks to the first handle and second handle suitable for use in sliding doors, the door can be opened and closed.

The door lock mechanism realized to achieve the object of the present invention is illustrated in the attached drawings, in which:

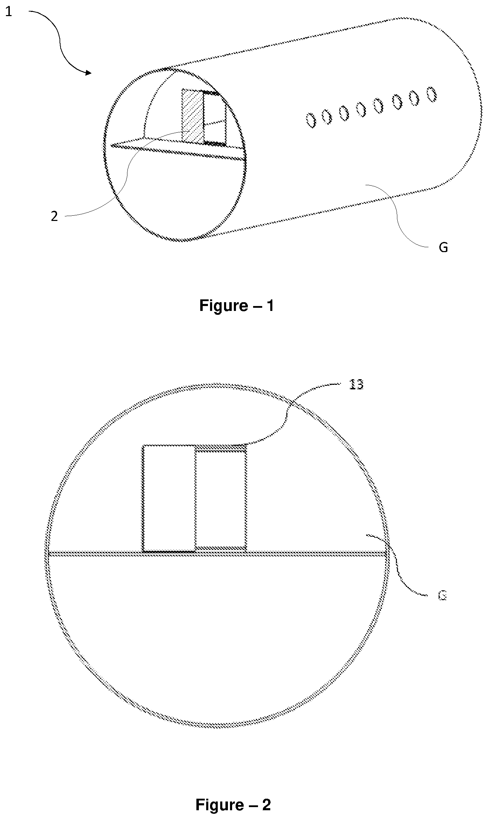

Figure 1 is a cross-sectional view of the door lock mechanism.
Figure 2 is a cross-sectional view of the rail mechanism.

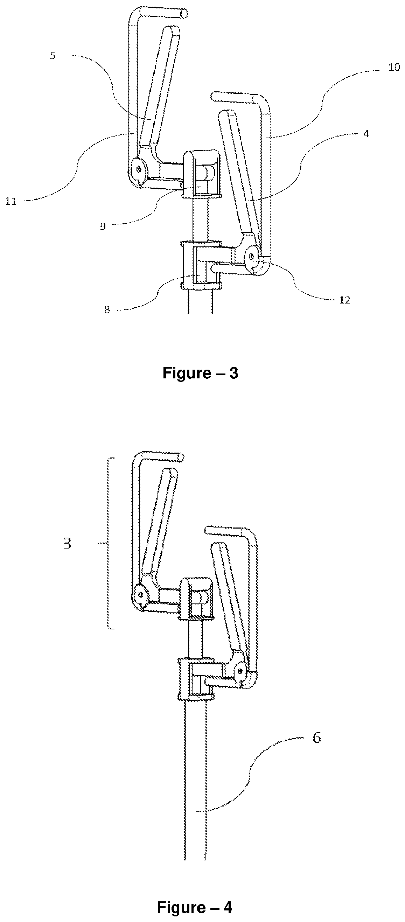

Figure 3 is a perspective view of the door lock mechanism.
Figure 4 is a perspective view of the door lock mechanism.

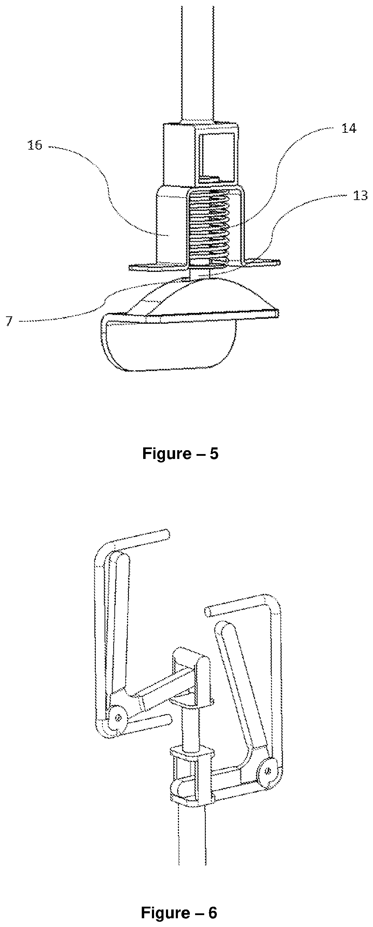

Figure 5 is a perspective view of the spring, pin, slot and bracket.
Figure 6 is a perspective view of the second handle in the first position (I).

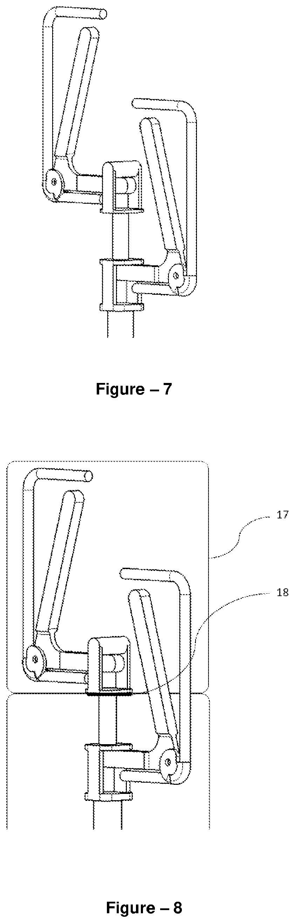

Figure 7 is a perspective view of the second handle in the second position (II).
Figure 8 is a perspective view of the door lock mechanism.

All the parts illustrated in figures are individually assigned a reference numeral and the corresponding terms of these numbers are listed below:
1. Door Lock Mechanism
2. Door
3. Handle
4. First Handle
5. Second Handle
6. Transfer Element
7. Slot
8. First Aperture
9. Second Aperture
10. First Grip
11. Second Grip
12. Connecting Element
13. Pin
14. Spring
15. Rail Mechanism
16. Bracket
17. Frame
18. Gasket
(G) Body
(I) First Position
(II) Second Position

The door lock mechanism (1) comprises at least one body (G) on an air and/or space vehicle; at least one door (2) on the body (G); at least one handle (3) on the door (2), which allows the door (2) to move; a transfer element (6) which is located on the door (2), in contact with the handle (3), and which is triggered by the handle (3), thus moving in the direction it extends; at least one slot (7) provided as a groove on the body (G), allowing the transfer element (6) to be inserted or removed; the handle (3) which has a first position (I) allowing movement of the door (3) when the transfer element (6) is completely removed from the slot (7); the transfer element (6) which is at least partially inserted into the slot (7); the handle (3) which has a second position (II) for restricting the movement of the door (2) when the transfer element (6) contacts the wall of the slot (7) (Figure - 1, Figure - 2).

The door lock mechanism (1) according to the invention comprises a first handle (4) and a second handle (5) that are located on the door (2) to rotate around an axis to which they are connected; a first aperture (8) and a second aperture (9) located sequentially on the transfer element (6); the transfer element (6) which moves when the first handle (4) contacts the wall of the first aperture (8) or when the second handle (5) contacts the wall of the second aperture (9); the transfer element (6) which enables the second handle (5) to remain in the second position (II) when the first handle (4) is in the first position (I), and enables the first handle (4) to remain in the second position (II) when the second handle (5) is in the first position (I) (Figure - 3, Figure - 4).

It comprises at least one body (G) on air and/or space vehicles; at least one door (2) that can be opened and closed to provide or prevent access to the body (G); at least one handle (3) triggered by the user and allowing the door (2) to be opened and closed; a transfer element (6) with at least one end connected to the handle (3), which transmits the movement received from the handle (3), and moves along the direction it extends; at least one slot (7) (groove) provided as a recess located in the same alignment with the transfer element (6), into which the transfer element (6) is placed removably; the handle (3) having a first position (I) in which the door (2) can be opened by the user with the movement of the transfer element (6) which is almost completely removed from the slot (7); the handle (3), which restricts the movement of the door (2) and has a second position (II) in which the transfer element (6) is located almost completely within the slot (7). Movement of the handle (3) when triggered by the user is transmitted to the transfer element (6). In the first position (I), the transfer element (6) is removed from the slot (7) so that the door (2) can move freely. In the second position (II), the transfer element (6) is inserted into the slot (7) so that the movement of the door (2) is prevented. In this way, the door (2) is moved between the second position (II) and the first position (I).

It comprises a first handle (4) and a second handle (5) which can rotate on the door (2) around the axis to which they are connected, and which at least partially contact the transfer element (6); a first aperture (8) and a second aperture (9) located consecutively and with a distance between each other on the transfer element (6), in which the first handle (4) and the second handle (5) can move; the first handle (4) in contact with the wall of the first aperture (8) or the second handle (5) in contact with the wall of the second aperture (9); the transfer element (6) moving along the first aperture (8) or the second aperture (9) when passing from the first position (I) to the second position (II) or from the second position (II) to the first position (I), thereby enabling the first handle (4) and second handle (5) to move independently of each other; the transfer element (6) which enables the second handle (5) to remain in the second position (II) while the first handle (4) is in the first position (I), and enables the first handle (4) to remain in the second position (II) while the second handle (5) is in the first position (I). Thus, while the first handle (4) is active and triggers the transfer element (6), it enables the second handle (5) to remain passive without triggering the transfer element (6), and while the second handle (5) triggers the transfer element (6), it enables the first handle (4) to remain passive without triggering the transfer element (6) (Figure - 5, Figure - 6, Figure - 7).

In an embodiment of the invention, the door lock mechanism (1) comprises the first handle (4) contacting the upper wall of the first aperture (8) in the first position (I); the second handle (5) contacting the lower wall of the second aperture (9) upon movement of the first handle (4); the first aperture (8) and the second aperture (9) that enable the second handle (5) to remain passive while the first handle (4) is in the first position (I) or second position (II), or enable the first handle (4) to remain passive when the second handle (5) is in the first position (I) or second position (II), thus acting as a stopper. Therefore, movement of the first handle (4) and the second handle (5) is provided as much as the distance that the first aperture (8) and the second aperture (9) move.

In an embodiment of the invention, the door lock mechanism (1) comprises the door (2), with the first handle (4) on one surface thereof, and the second handle (5) on the other surface thereof. Thanks to the first handle (4) and second handle (5) located opposite each other on the door (2), the door (2) can be opened and closed on both sides.

In an embodiment of the invention, the door lock mechanism (1) comprises a first grip (10) with at least one end connected to the first handle (4), wherein the first grip (10) is mounted on the door (2), allows a user to control movement of the door (2), contacts the first handle (4) when the first handle (4) is in the first position (I), thereby acting as a stopper; a second grip (11) with at least one end connected to the second handle (5), wherein the second grip (11) contacts the second handle (5) when the second handle (5) is in the first position (I), thereby acting as a stopper; at least one connecting element (12) on the first grip (10) and the second grip (11), which allows the first handle (4) or the second handle (5) to rotate around its own axis from the point where they contact the first grip (10) or the second grip (11). While the door (2) is moved from the first position (I) to the second position (II), the door (2) can be closed by the first grip (10) or the second grip (11) pulled by the user. It comprises a connecting element (12) that enables the first handle (4) and the second handle (5) to be rotated around their own axis from where they contact the first grip (10) or the second grip (11).

In an embodiment of the invention, the door lock mechanism (1) comprises the first handle (4) and the second handle (5) that are located opposite each other, in a symmetrical and conjugate form. First handle (4) and second handle (5) enable the door (2) to move from one side and the other side, respectively.

In an embodiment of the invention, the door lock mechanism (1) comprises the first handle (4) and the second handle (5) that extend to the other side at an angle predetermined by the user, with one end remaining within the first aperture (8) or the second aperture (9) and the other end being almost completely perpendicular to the connecting element (12).

In an embodiment of the invention, the door lock mechanism (1) comprises at least one pin (13) on the transfer element (6), which is triggered by the movement of the first handle (4) or second handle (5) so as to be inserted in the slot (7), thereby allowing the door (2) to be moved to the second position (II). The pin (13) is connected to the transfer element (6) on at least one end, enabling the door (2) to be opened or locked with the movement received from the transfer element (6).

In an embodiment of the invention, the door lock mechanism (1) comprises the first aperture (8) and the second aperture (9) in equal dimensions, which are located on the transfer element (6) with a distance therebetween, wherein the first aperture (8) and the second aperture (9) have the same distance with the pin (13) remaining inside the slot (7), and have spaces of almost exactly the same dimensions. It comprises the first aperture (8) and second aperture (9) with a space therein equal to the distance where the pin (13) is inserted in the slot (7). On the transfer element (6), the first aperture (8) and the second aperture (9) are located one below and the other above.

In an embodiment of the invention, the door lock mechanism (1) comprises at least one spring (14) surrounding the pin (13), wherein the spring (14) is compressed to apply a pressure force towards the slot (7) when the door (2) is moved from the first position (I) to the second position (II), thus allowing the pin (13) to be inserted into the slot (7). As the pin (13) passes through the curved protrusion on the rail mechanism (15), the spring (14) is compressed. In this way, the pin (13) can be placed in the slot (7). The spring (14), which is compressed by the transfer element (6) in the first position (I), is enabled to move in the same form until it reaches the second position (II).

In an embodiment of the invention, the door lock mechanism (1) comprises at least one rail mechanism (15) on the door (2), which allows the door (2) to be slid by the user so as to be opened and/or closed. Therefore, the door (2) is enabled to move on the rail mechanism (15) when moving from the first position (I) to the second position (II) or from the second position (II) to the first position (I). When the first handle (4) or the second handle (5) is in the first position (I), the pin (13) is removed from the slot (7), so that the door (2) can be opened by sliding on the rail mechanism (15). While the door (2) is being closed, the user grasps the first grip (10) or the second grip (11) and slides the door (2) on the rail mechanism (15) to ensure that the pin (13) is inserted into the slot (7). Thus, the door (2) is locked.

In an embodiment of the invention, the door lock mechanism (1) comprises at least one bracket (16) located between the slot (7) and the transfer element (6) so as to surround the pin (13), applying pressure to the spring (14) and thus enabling the movement of the pin (13). The bracket (16) applies a pressure on the pin (13), so that it can be inserted into the slot (7) more safely.

In an embodiment of the invention, the door lock mechanism (1) comprises at least one frame (17) on the door (2); the first aperture (8) and the second aperture (9) located opposite each other on the frame (17); the lower wall of the first aperture (8) preventing the movement of the first handle (4) or second handle (5) when provided on the frame (17), or the upper wall of the second aperture (9) preventing the movement of the first handle (4) or second handle (5) when in contact with the frame (17). It comprises the first aperture (8) and second aperture (9) located one under the other on the frame (17), one at the bottom and the other at the top, in which the lower wall of the first aperture (8) remains on the frame (17) or the upper wall of the second aperture (9) terminates its movement upon contact with the frame (17) (Figure - 8).

In an embodiment of the invention, the door lock mechanism (1) comprises at least one gasket (an o-ring) (18) located on a surface of the first aperture (8) wall and the second aperture (9) wall that is in contact with the door (2), thus providing a seal. In this way, air passage to the inner and outer sides of the door (2) is prevented.

In an embodiment of the invention, the door lock mechanism (1) comprises the first handle (4) or the second handle (5), which is almost completely V-shaped. An extension of the first handle (4) or second handle (5) extends towards the first aperture (8) or second aperture (9), and another extension thereof extends towards the first grip (10) or second grip (11), in a curved manner, at an angle determined by the user. In the first position (I), the user grasps and triggers one end of the first handle (4) and second handle (5), while the other end of the first handle (4) or the second handle (5) moves towards the first grip (10) or the second grip (11).

In an embodiment of the invention, the door lock mechanism (1) comprises the first handle (4) or second handle (5) suitable for use on the door (2) that slides on the rail mechanism (15). Therefore, the door (2) can be opened and closed by moving on the rail mechanism (15).

## Claims

1. A door lock mechanism (1) comprising at least one body (G) for an air and/or space vehicle; at least one door (2) on the body (G); at least one handle (3) on the door (2), which allows the door (2) to move; a transfer element (6) which is located on the door (2), in contact with the handle (3), and which is triggered by the handle (3), thus moving in the direction it extends; at least one slot (7) provided as a groove on the body (G), allowing the transfer element (6) to be inserted or removed; the handle (3) which has a first position (I) allowing movement of the door (3) when the transfer element (6) is completely removed from the slot (7); the transfer element (6) which is at least partially inserted into the slot (7); the handle (3) which has a second position (II) for restricting the movement of the door (2) when the transfer element (6) contacts the wall of the slot (7), a first handle (4) and a second handle (5) that are located on the door (2) to rotate around an axis to which they are connected, the transfer element (6) which enables the second handle (5) to remain in the second position (II) when the first handle (4) is in the first position (I), and enables the first handle (4) to remain in the second position (II) when the second handle (5) is in the first position (I); **characterized by,** it further comprises, a first aperture (8) and a second aperture (9) located sequentially on the transfer element (6); the transfer element (6) which moves when the first handle (4) contacts the wall of the first aperture (8) or when the second handle (5) contacts the wall of the second aperture (9).

2. A door lock mechanism (1) according to claim 1, **characterized by** the first handle (4) contacting the upper wall of the first aperture (8) in the first position (I); the second handle (5) contacting the lower wall of the second aperture (9) upon movement of the first handle (4); the first aperture (8) and the second aperture (9) that enable the second handle (5) to remain passive while the first handle (4) is in the first position (I) or second position (II), or enable the first handle (4) to remain passive when the second handle (5) is in the first position (I) or second position (II), thus acting as a stopper.

3. A door lock mechanism (1) according to claim 1 or claim 2, **characterized by** the door (2), with the first handle (4) on one surface thereof, and the second handle (5) on the other surface thereof.

4. A door lock mechanism (1) according to any of the above claims, **characterized by** a first grip (10) with at least one end connected to the first handle (4), wherein the first grip (10) is mounted on the door (2), allows a user to control movement of the door (2), contacts the first handle (4) when the first handle (4) is in the first position (I), thereby acting as a stopper; a second grip (11) with at least one end connected to the second handle (5), wherein the second grip (11) contacts the second handle (5) when the second handle (5) is in the first position (I), thereby acting as a stopper; at least one connecting element (12) on the first grip (10) and the second grip (11), which allows the first handle (4) or the second handle (5) to rotate around its own axis from the point where they contact the first grip (10) or the second grip (11).

5. A door lock mechanism (1) according to any of the above claims, **characterized by** the first handle (4) and the second handle (5) that are located opposite each other, in a symmetrical and conjugate form.

6. A door lock mechanism (1) according to claim 4 or claim 5, **characterized by** the first handle (4) and the second handle (5) that extend to the other side at an angle predetermined by the user, with one end remaining within the first aperture (8) or the second aperture (9) and the other end being almost completely perpendicular to the connecting element (12).

7. A door lock mechanism (1) according to any of the above claims, **characterized by** at least one pin (13) on the transfer element (6), which is triggered by the movement of the first handle (4) or second handle (5) so as to be inserted in the slot (7), thereby allowing the door (2) to be moved to the second position (II).

8. A door lock mechanism (1) according claim 7, **characterized by** the first aperture (8) and the second aperture (9) in equal dimensions, which are located on the transfer element (6) with a distance therebetween, wherein the first aperture (8) and the second aperture (9) have the same distance with the pin (13) remaining inside the slot (7), and have spaces of almost exactly the same dimensions.

9. A door lock mechanism (1) according claim 7 or claim 8, **characterized by** at least one spring (14) surrounding the pin (13), wherein the spring (14) is compressed to apply a pressure force towards the slot (7) when the door (2) is moved from the first position (I) to the second position (II), thus allowing the pin (13) to be inserted into the slot (7).

10. A door lock mechanism (1) according to any of the above claims, **characterized by** at least one rail mechanism (15) on the door (2), which allows the door (2) to be slid by the user so as to be opened and/or closed.

11. A door lock mechanism (1) according to claim 9 or claim 10, **characterized by** at least one bracket (16) located between the slot (7) and the transfer element (6) so as to surround the pin (13), applying pressure to the spring (14) and thus enabling the movement of the pin (13).

12. A door lock mechanism (1) according to any of the above claims, **characterized by** at least one frame (17) on the door (2); the first aperture (8) and the second aperture (9) located opposite each other on the frame (17); the lower wall of the first aperture (8) preventing the movement of the first handle (4) or second handle (5) when provided on the frame (17), or the upper wall of the second aperture (9) preventing the movement of the first handle (4) or second handle (5) when in contact with the frame (17).

13. A door lock mechanism (1) according to any of the above claims, **characterized by** at least one gasket (an o-ring) (18) located on a surface of the first aperture (8) wall and the second aperture (9) wall that is in contact with the door (2), thus providing a seal.

14. A door lock mechanism (1) according to any of the above claims, **characterized by** the first handle (4) or the second handle (5), which is almost completely V-shaped.

15. A door lock mechanism (1) according to any of the claims 10 to 14, **characterized by** the first handle (4) or second handle (5) suitable for use on the door (2) that slides on the rail mechanism (15).

## Patentansprüche

1. Ein Türverriegelungsmechanismus (1), umfassend mindestens einen Rumpf (G) für ein Luft- und/oder Raumfahrzeug; mindestens eine am Rumpf (G) angeordnete Tür (2); mindestens einen an der Tür (2) angeordneten Griff (3), der eine Bewegung der Tür (2) ermöglicht; ein Übertragungselement (6), das an der Tür (2) angeordnet ist, mit dem Griff (3) in Kontakt steht und durch den Griff (3) betätigt wird, wobei es sich in seiner Erstreckungsrichtung bewegt; mindestens einen als Nut am Rumpf (G) ausgebildeten Schlitz (7), der das Einführen und Herausziehen des Übertragungselements (6) ermöglicht; wobei der Griff (3) eine erste Position (I) aufweist, in der eine Bewegung der Tür (2) möglich ist, wenn das Übertragungselement (6) vollständig aus dem Schlitz (7) herausgezogen ist; wobei der Griff (3) eine zweite Position (II) aufweist, in der die Bewegung der Tür (2) eingeschränkt wird, wenn das Übertragungselement (6) an der Wandung des Schlitzes (7) anliegt; einen ersten Griff (4) und einen zweiten Griff (5), die an der Tür (2) angeordnet und jeweils um eine Achse drehbar sind, mit der sie verbunden sind; wobei das Übertragungselement (6) bewirkt, dass der zweite Griff (5) in der zweiten Position (II) verbleibt, wenn sich der erste Griff (4) in der ersten Position (I) befindet, und dass der erste Griff (4) in der zweiten Position (II) verbleibt, wenn sich der zweite Griff (5) in der ersten Position (I) befindet; **dadurch gekennzeichnet, dass** der Türverriegelungsmechanismus (1) ferner eine erste Öffnung (8) und eine zweite Öffnung (9) umfasst, die hintereinander am Übertragungselement (6) angeordnet sind, wobei sich das Übertragungselement (6) bewegt, wenn der erste Griff (4) an der Wandung der ersten Öffnung (8) oder der zweite Griff (5) an der Wandung der zweiten Öffnung (9) anliegt.

2. Türverriegelungsmechanismus (1) nach Anspruch 1, **dadurch gekennzeichnet, dass** der erste Griff (4) in der ersten Position (I) an der oberen Wandung der ersten Öffnung (8) anliegt und der zweite Griff (5) bei einer Bewegung des ersten Griffs (4) an der unteren Wandung der zweiten Öffnung (9) anliegt, wobei die erste Öffnung (8) und die zweite Öffnung (9) so ausgebildet sind, dass der zweite Griff (5) passiv bleibt, während sich der erste Griff (4) in der ersten Position (I) oder in der zweiten Position (II) befindet, oder dass der erste Griff (4) passiv bleibt, während sich der zweite Griff (5) in der ersten Position (I) oder in der zweiten Position (II) befindet, wobei die Öffnungen als Anschläge wirken.

3. Türverriegelungsmechanismus (1) nach Anspruch 1 oder 2, **dadurch gekennzeichnet, dass** die Tür (2) den ersten Griff (4) an einer ihrer Oberflächen und den zweiten Griff (5) an ihrer gegenüberliegenden Oberfläche aufweist.

4. Türverriegelungsmechanismus (1) nach einem der vorstehenden Ansprüche, **dadurch gekennzeichnet, dass** ein erster Griff (10) mit einem seiner Enden mit dem ersten Griff (4) verbunden und an der Tür (2) angebracht ist, einem Benutzer die Steuerung der Bewegung der Tür (2) ermöglicht und den ersten Griff (4) berührt, wenn sich dieser in der ersten Position (I) befindet, wodurch er als Anschlag wirkt; dass ein zweiter Griff (11) mit einem seiner Enden mit dem zweiten Griff (5) verbunden ist und den zweiten Griff (5) berührt, wenn sich dieser in der ersten Position (I) befindet, wodurch er als Anschlag wirkt; und dass mindestens ein Verbindungselement (12) am ersten Griff (10) und am zweiten Griff (11) vorgesehen ist, das es dem ersten Griff (4) oder dem zweiten Griff (5) ermöglicht, sich um die jeweilige Achse zu drehen, wobei die Drehung um die Achse erfolgt, die durch den Berührungspunkt mit dem ersten Griff (10) beziehungsweise dem zweiten Griff (11) definiert ist.

5. Türverriegelungsmechanismus (1) nach einem der vorstehenden Ansprüche, **dadurch gekennzeichnet, dass** der erste Griff (4) und der zweite Griff (5) einander gegenüberliegend sowie in symmetrischer und konjugierter Anordnung vorgesehen sind.

6. Türverriegelungsmechanismus (1) nach Anspruch 4 oder 5, **dadurch gekennzeichnet, dass** sich der erste Griff (4) und der zweite Griff (5) in einem vom Benutzer vorgegebenen Winkel zur jeweils anderen Seite erstrecken, wobei jeweils ein Ende innerhalb der ersten Öffnung (8) beziehungsweise der zweiten Öffnung (9) verbleibt und das andere Ende nahezu senkrecht zum Verbindungselement (12) verläuft.

7. Türverriegelungsmechanismus (1) nach einem der vorstehenden Ansprüche, **dadurch gekennzeichnet, dass** mindestens ein Stift (13) am Übertragungselement (6) angeordnet ist und durch die Bewegung des ersten Griffs (4) oder des zweiten Griffs (5) so betätigt wird, dass er in den Schlitz (7) eingeführt wird, wodurch die Tür (2) in die zweite Position (II) bewegt werden kann.

8. Türverriegelungsmechanismus (1) nach Anspruch 7, **dadurch gekennzeichnet, dass** die erste Öffnung (8) und die zweite Öffnung (9) gleiche Abmessungen aufweisen und mit Abstand voneinander am Übertragungselement (6) angeordnet sind, wobei beide Öffnungen denselben Abstand zu dem im Schlitz (7) verbleibenden Stift (13) aufweisen und Freiräume mit nahezu identischen Abmessungen besitzen.

9. Türverriegelungsmechanismus (1) nach Anspruch 7 oder 8, **dadurch gekennzeichnet, dass** mindestens eine den Stift (13) umgebende Feder (14) vorgesehen ist, die zusammengedrückt wird, um eine Druckkraft in Richtung des Schlitzes (7) auszuüben, wenn die Tür (2) aus der ersten Position (I) in die zweite Position (II) bewegt wird, wodurch der Stift (13) in den Schlitz (7) eingeführt werden kann.

10. Türverriegelungsmechanismus (1) nach einem der vorstehenden Ansprüche, **dadurch gekennzeichnet, dass** mindestens ein Schienenmechanismus (15) an der Tür (2) angeordnet ist, der es dem Benutzer ermöglicht, die Tür (2) durch Verschieben zu öffnen und/oder zu schließen.

11. Türverriegelungsmechanismus (1) nach Anspruch 9 oder 10, **dadurch gekennzeichnet, dass** mindestens ein Bügel (16) zwischen dem Schlitz (7) und dem Übertragungselement (6) angeordnet ist, den Stift (13) umschließt, Druck auf die Feder (14) ausübt und dadurch die Bewegung des Stifts (13) ermöglicht.

12. Türverriegelungsmechanismus (1) nach einem der vorstehenden Ansprüche, **dadurch gekennzeichnet, dass** mindestens ein Rahmen (17) an der Tür (2) angeordnet ist, wobei die erste Öffnung (8) und die zweite Öffnung (9) einander gegenüberliegend am Rahmen (17) angeordnet sind und wobei die untere Wandung der ersten Öffnung (8) eine Bewegung des ersten Griffs (4) oder des zweiten Griffs (5) verhindert, wenn der betreffende Griff am Rahmen (17) anliegt, oder die obere Wandung der zweiten Öffnung (9) eine Bewegung des ersten Griffs (4) oder des zweiten Griffs (5) verhindert, wenn der betreffende Griff den Rahmen berührt.

13. Türverriegelungsmechanismus (1) nach einem der vorstehenden Ansprüche, **dadurch gekennzeichnet, dass** mindestens eine Dichtung (18), insbesondere ein O-Ring, an einer Oberfläche der Wandung der ersten Öffnung (8) und der Wandung der zweiten Öffnung (9) angeordnet ist, die mit der Tür (2) in Kontakt steht, wodurch eine Abdichtung bereitgestellt wird.

14. Türverriegelungsmechanismus (1) nach einem der vorstehenden Ansprüche, **dadurch gekennzeichnet, dass** der erste Griff (4) oder der zweite Griff (5) annähernd vollständig V-förmig ausgebildet ist.

15. Türverriegelungsmechanismus (1) nach einem der Ansprüche 10 bis 14, **dadurch gekennzeichnet, dass** der erste Griff (4) oder der zweite Griff (5) zur Verwendung an der auf dem Schienenmechanismus (15) gleitenden Tür (2) geeignet ist.

## Revendications

1. Mécanisme de verrouillage de porte (1) comprenant au moins un corps (G) destiné à un véhicule aérien et/ou spatial ; au moins une porte (2) disposée sur le corps (G) ; au moins une poignée (3) disposée sur la porte (2), permettant le déplacement de la porte (2) ; un élément de transmission (6) disposé sur la porte (2), en contact avec la poignée (3), et actionné par la poignée (3), se déplaçant ainsi dans la direction selon laquelle il s'étend ; au moins une fente (7) réalisée sous la forme d'une rainure sur le corps (G), permettant l'insertion ou le retrait de l'élément de transmission (6) ; la poignée (3) présentant une première position (I) permettant le déplacement de la porte (2) lorsque l'élément de transmission (6) est complètement retiré de la fente (7) ; l'élément de transmission (6) étant au moins partiellement inséré dans la fente (7) ; la poignée (3) présentant une seconde position (II) permettant de limiter le déplacement de la porte (2) lorsque l'élément de transmission (6) entre en contact avec la paroi de la fente (7) ; une première poignée (4) et une seconde poignée (5) disposées sur la porte (2) de manière à pouvoir tourner autour d'un axe auquel elles sont reliées ; l'élément de transmission (6) permettant à la seconde poignée (5) de rester dans la seconde position (II) lorsque la première poignée (4) se trouve dans la première position (I), et permettant à la première poignée (4) de rester dans la seconde position (II) lorsque la seconde poignée (5) se trouve dans la première position (I) ; **caractérisé en ce qu'**il comprend en outre une première ouverture (8) et une seconde ouverture (9) disposées successivement sur l'élément de transmission (6) ; l'élément de transmission (6) se déplaçant lorsque la première poignée (4) entre en contact avec la paroi de la première ouverture (8) ou lorsque la seconde poignée (5) entre en contact avec la paroi de la seconde ouverture (9).

2. Mécanisme de verrouillage de porte (1) selon la revendication 1, **caractérisé en ce que** la première poignée (4) entre en contact avec la paroi supérieure de la première ouverture (8) dans la première position (I) ; la seconde poignée (5) entre en contact avec la paroi inférieure de la seconde ouverture (9) lors du déplacement de la première poignée (4) ; la première ouverture (8) et la seconde ouverture (9) permettent à la seconde poignée (5) de rester passive lorsque la première poignée (4) se trouve dans la première position (I) ou la seconde position (II), ou permettent à la première poignée (4) de rester passive lorsque la seconde poignée (5) se trouve dans la première position (I) ou la seconde position (II), faisant ainsi office de butée.

3. Mécanisme de verrouillage de porte (1) selon la revendication 1 ou la revendication 2, **caractérisé en ce que** la porte (2) comporte la première poignée (4) sur l'une de ses surfaces et la seconde poignée (5) sur son autre surface.

4. Mécanisme de verrouillage de porte (1) selon l'une quelconque des revendications précédentes, **caractérisé en ce qu'**une première poignée de préhension (10), dont au moins une extrémité est reliée à la première poignée (4), est montée sur la porte (2), permet à l'utilisateur de commander le déplacement de la porte (2) et entre en contact avec la première poignée (4) lorsque la première poignée (4) se trouve dans la première position (I), faisant ainsi office de butée ; une seconde poignée de préhension (11), dont au moins une extrémité est reliée à la seconde poignée (5), entre en contact avec la seconde poignée (5) lorsque la seconde poignée (5) se trouve dans la première position (I), faisant ainsi office de butée ; au moins un élément de liaison (12) est disposé sur la première poignée de préhension (10) et la seconde poignée de préhension (11) et permet à la première poignée (4) ou à la seconde poignée (5) de tourner autour de son propre axe au point de contact avec la première poignée de préhension (10) ou la seconde poignée de préhension (11).

5. Mécanisme de verrouillage de porte (1) selon l'une quelconque des revendications précédentes, **caractérisé en ce que** la première poignée (4) et la seconde poignée (5) sont disposées l'une en face de l'autre, selon une configuration symétrique et conjuguée.

6. Mécanisme de verrouillage de porte (1) selon la revendication 4 ou la revendication 5, **caractérisé en ce que** la première poignée (4) et la seconde poignée (5) s'étendent de l'autre côté selon un angle prédéterminé par l'utilisateur, l'une de leurs extrémités restant à l'intérieur de la première ouverture (8) ou de la seconde ouverture (9) et l'autre extrémité étant sensiblement perpendiculaire à l'élément de liaison (12).

7. Mécanisme de verrouillage de porte (1) selon l'une quelconque des revendications précédentes, **caractérisé en ce qu'**au moins une goupille (13) est disposée sur l'élément de transmission (6) et est actionnée par le mouvement de la première poignée (4) ou de la seconde poignée (5) de manière à être insérée dans la fente (7), permettant ainsi à la porte (2) de passer à la seconde position (II).

8. Mécanisme de verrouillage de porte (1) selon la revendication 7, **caractérisé en ce que** la première ouverture (8) et la seconde ouverture (9) présentent des dimensions égales et sont disposées sur l'élément de transmission (6) à une certaine distance l'une de l'autre, la première ouverture (8) et la seconde ouverture (9) étant situées à égale distance de la goupille (13), laquelle reste à l'intérieur de la fente (7), et présentant des espaces de dimensions sensiblement identiques.

9. Mécanisme de verrouillage de porte (1) selon la revendication 7 ou la revendication 8, **caractérisé en ce qu'**au moins un ressort (14) entoure la goupille (13), le ressort (14) étant comprimé de manière à exercer une force en direction de la fente (7) lorsque la porte (2) passe de la première position (I) à la seconde position (II), permettant ainsi l'insertion de la goupille (13) dans la fente (7).

10. Mécanisme de verrouillage de porte (1) selon l'une quelconque des revendications précédentes, **caractérisé en ce qu'**au moins un mécanisme de rail (15) est disposé sur la porte (2) et permet à l'utilisateur de faire coulisser la porte (2) afin de l'ouvrir et/ou de la fermer.

11. Mécanisme de verrouillage de porte (1) selon la revendication 9 ou la revendication 10, **caractérisé en ce qu'**au moins un support (16) est disposé entre la fente (7) et l'élément de transmission (6) de manière à entourer la goupille (13) et à exercer une pression sur le ressort (14), permettant ainsi le déplacement de la goupille (13).

12. Mécanisme de verrouillage de porte (1) selon l'une quelconque des revendications précédentes, **caractérisé en ce qu'**au moins un cadre (17) est disposé sur la porte (2) ; la première ouverture (8) et la seconde ouverture (9) sont disposées l'une en face de l'autre sur le cadre (17) ; la paroi inférieure de la première ouverture (8) empêche le déplacement de la première poignée (4) ou de la seconde poignée (5) lorsque la poignée concernée est disposée sur le cadre (17), ou la paroi supérieure de la seconde ouverture (9) empêche le déplacement de la première poignée (4) ou de la seconde poignée (5) lorsque la poignée concernée est en contact avec le cadre (17).

13. Mécanisme de verrouillage de porte (1) selon l'une quelconque des revendications précédentes, **caractérisé en ce qu'**au moins un joint d'étanchéité (joint torique) (18) est disposé sur une surface de la paroi de la première ouverture (8) et sur une surface de la paroi de la seconde ouverture (9), en contact avec la porte (2), assurant ainsi l'étanchéité.

14. Mécanisme de verrouillage de porte (1) selon l'une quelconque des revendications précédentes, **caractérisé en ce que** la première poignée (4) ou la seconde poignée (5) présente une forme sensiblement en V.

15. Mécanisme de verrouillage de porte (1) selon l'une quelconque des revendications 10 à 14, **caractérisé en ce que** la première poignée (4) ou la seconde poignée (5) est adaptée à être utilisée sur la porte (2) qui coulisse sur le mécanisme de rail (15).
